# EUROPÄISCHE PATENTANMELDUNG

(11) **EP 3 173 743 A1**
(43) Veröffentlichungstag der Anmeldung: **31.05.2017**
(21) Anmeldenummer: 16020459.0
(22) Anmeldetag: 23.11.2016
(51) Int. Cl.: G01C 21/36, G10L 25/63

(54) **VERFAHREN ZUM AUSGEBEN EINER FOLGE VON BEWEGUNGSANWEISUNGEN**

(30) Priorität: 25.11.2015 DE 102015223271
(71) Anmelder: Preh Car Connect GmbH, 01156 Dresden (DE)
(72) Erfinder: Kolanko, Jan, 01157 Dresden (DE)

(57) **Zusammenfassung**

Die Erfindung betrifft ein Verfahren zum Ausgeben einer Folge von Bewegungsanweisungen mittels einer Navigationseinrichtung (100) an einen Benutzer mit den folgenden Schritten: Bereitstellen einer Route, die von einer Position des Benutzers zu einer Zielposition führt, Bereitstellen eines Manövers, bei dessen Ausführung der Benutzer dem Verlauf der Route folgt, Feststellen, ob der Benutzer ein Anzeichen von Unkonzentriertheit zeigt, unter Verwendung einer Sensoreinheit (150) und, wenn festgestellt wird, dass der Benutzer kein Anzeichen von Unkonzentriertheit zeigt, Ausgeben einer ersten dem Manöver zugeordneten Folge von Bewegungsanweisungen und, wenn festgestellt wird, dass der Benutzer ein Anzeichen von Unkonzentriertheit zeigt, Ausgeben einer zweiten dem Manöver zugeordneten Folge von Bewegungsanweisungen.

## Beschreibung

Die Erfindung betrifft ein Verfahren zum Ausgeben einer Folge von Bewegungsanweisungen mittels einer Navigationseinrichtung an einen Benutzer und eine Navigationseinrichtung zum Ausführen des Verfahrens.

Eine Navigationseinrichtung kann einem Benutzer ihre Position angeben. Die Position der Navigationseinrichtung wird meist unter Verwendung eines Satellitennavigationssystems bestimmt, zum Beispiel unter Verwendung von GPS, GLONASS, COMPASS oder GALILEO. Ferner kann die Navigationseinrichtung eine Route, zum Beispiel von einem aktuellen Ort zu einem Zielort, berechnen und eine Zielführung, zum Beispiel von dem aktuellen Ort zu dem Zielort, ausgeben. Als Zielführung wird ein Prozess bezeichnet, der den Benutzer entlang der Route leitet. Ein Ort kann von einer geografischen Position, nachfolgend Geoposition genannt, repräsentiert werden.

Darüber hinaus kann die Navigationseinrichtung in der Lage sein, eine routenbezogene Information auszugeben, zum Beispiel eine Warnmeldung vor einer scharfen Kurve, einer schwer einsehbaren Kreuzung und/oder einem starken Gefälle. Eine routenbezogene Information kann zudem einen Hinweis auf einen interessanten Ort (engl.: Point of Interest, POI) enthalten.

Die Navigationseinrichtung unterstützt den Benutzer, zum Beispiel beim Führen eines Fahrzeugs oder bei der Fortbewegung in einem unbekannten und/oder unübersichtlichen Gebiet, indem sie Hinweise zum Erreichen eines Zielorts ausgibt, zum Beispiel optisch oder akustisch über eine Ausgabe- und Bedieneinheit. Somit kann eine Gefahrensituation, in die der Benutzer sich und/oder Dritte bringt, zum Beispiel aufgrund abrupten Ausführens einer Fahrtrichtungsänderung, vermieden werden.

Unter einem Fahrzeug ist ein mobiles Verkehrsmittel zu verstehen, zum Beispiel ein Kraftfahrzeug oder ein Fahrrad, aber auch ein Luftfahrzeug oder ein Wasserfahrzeug.

Unter einem Manöver ist eine kontrollierte Veränderung der Geoposition eines Objekts zu verstehen, bei deren Ausführung der Benutzer einem Verlauf einer Route folgt. Als Objekt können ein Fahrzeug, ein Flugzeug, eine Person, ein Tier oder ein Roboter in Frage kommen. Die Zielführung gibt zum Beispiel eine Bewegungsanweisung zu einem Manöver aus, gemäß der der Benutzer bei einer auf der Route liegenden Kreuzung links abbiegen soll, um der Route zum Zielort zu folgen.

Das Manöver wird unter Zuhilfenahme einer Bewegungsanweisung oder einer Folge von Bewegungsanweisungen beschrieben. Eine Bewegungsanweisung lautet zum Beispiel "Jetzt links abbiegen." Eine Folge von Bewegungsanweisungen lautet zum Beispiel "Demnächst bitte links abbiegen", "In 200 Metern bitte links abbiegen" und "Jetzt links abbiegen." Eine Folge von Bewegungsanweisungen ist immer auf ein Manöver bezogen bzw. immer einem Manöver zugeordnet. Die ersten Bewegungsanweisungen einer Folge von Bewegungsanweisungen weisen in der Regel einen informativen Charakter auf. Der Benutzer soll so auf das auszuführende Manöver vorbereitet werden. Die letzte Bewegungsanweisung einer Folge von Bewegungsanweisungen hingegen enthält eine Aufforderung, das Manöver sofort auszuführen.

Eine Bewegungsanweisung der Folge von Bewegungsanweisungen kann einen bestimmten zeitlichen Abstand zum Manöver, zum Beispiel eine Minute, eine bestimmte räumliche Distanz zum Manöver, wie eine Entfernung von 200 Metern, oder eine bestimmte Geoposition bezogen auf das Manöver, zum Beispiel an einem Abzweig einer Straße, aufweisen.

Die Navigationseinrichtung kann zudem eingerichtet sein, Informationen zu einer verbleibenden Strecke zu einem Zielort anzuzeigen, Verkehrsinformationen zu berücksichtigen und/oder eine Ausweichroute oder eine den Interessen des Benutzers entsprechende Alternativroute anzubieten.

Die Routenberechnung und die Zielführung sind auf Landkartendaten gestützt, wobei die Landkartendaten raumbezogene Objekte und diesen zugeordnete Informationen repräsentieren, zum Beispiel Straßen, Wege, Gebäude, Plätze, Eisenbahnlinien, Flüsse, Brücken, Parkmöglichkeiten, Raststätten, Verkehrsregelungen, Geschwindigkeitsbegrenzungen, Geländeformen, Landesgrenzen und Ortschaften. Diese Objekte und Informationen können mit Hilfe eines Zeichensystems auf der Ausgabe- und Bedieneinheit, zum Beispiel einem berührungsempfindlichen Bildschirm, dargestellt werden, um die realen räumlichen Verhältnisse für den Benutzer der Navigationseinrichtung, der den Bildschirm betrachtet, verständlich zu machen.

Die Landkartendaten repräsentieren unter anderem eine Mehrzahl von Straßen und Wegen, nachfolgend als Verkehrswege bezeichnet, und sind in einer Landkartendatenbank gespeichert. Die Verkehrswege bilden ein Verkehrswegenetz wie das öffentliche Straßennetz der Bundesrepublik Deutschland, ohne jedoch auf durch ein Kraftfahrzeug befahrbare Straßen oder ein bestimmtes Territorium beschränkt zu sein. Vielmehr können auch Radwege, Fußwanderwege, Skiwanderwege, Schifffahrtswege und Forstwege digital modelliert und als Landkartendaten in der Landkartendatenbank gespeichert werden.

Bei einer Zielführung gibt eine Navigationseinrichtung eine auf ein Manöver bezogene Folge von Bewegungsanweisungen an einen Benutzer der Navigationseinrichtung aus, die der Benutzer auszuführen hat, um einer Route zu folgen. Sollte der Benutzer aufgrund mangelnder Konzentration und/oder Ablenkung eine Bewegungsanweisung der Folge von Bewegungsanweisungen nicht oder nicht vollständig wahrnehmen, kann er einen von der Navigationseinrichtung ermittelten optimalen Zeitpunkt für die Ausführung des Manövers verpassen. Damit besteht die Gefahr, dass der Benutzer beim Erfassen der letzten Bewegungsanweisung der Folge von Bewegungsanweisungen das angewiesene Manöver abrupt ausführt und dabei sich oder Dritte in Gefahr bringt. Beispielsweise nimmt der der Benutzer aufgrund von Unkonzentriertheit lediglich die letzte Bewegungsanweisung einer Folge von Bewegungsanweisungen wahr, die den Benutzer auffordert: "Jetzt links abbiegen." Ein anderer Nachteil kann dem Benutzer dadurch entstehen, dass er das Manöver nicht ausführen kann und dadurch die Route verlassen und einen Umweg in Kauf nehmen muss. Dies kann zu einer Verspätung des Benutzers führen.

Es sind Methoden bekannt, mit denen die Konzentration eines Benutzers einer Navigationseinrichtung feststellbar ist. Herkömmliche Navigationssysteme sind dazu mit weiteren Funktionsmodulen gekoppelt, zum Beispiel mit einer Bildverarbeitungseinheit oder mit einer Sensoreinheit, welche zum Feststellen der Konzentration eingerichtet sind. Bei Feststellen einer reduzierten Konzentration wird in der Regel ein Reizsignal ausgegeben, zum Beispiel ein akustisches Signal oder ein Vibrieren, welches die Aufmerksamkeit des Benutzers wiederherstellen soll.

Die Ausgabe eines Reizsignals kann die Aufmerksamkeit eines Benutzers steigern. Es besteht jedoch das Problem, dass eine gesteigerte Aufmerksamkeit nicht zu einer ausreichenden Konzentration auf ein Manöver führt. So wird ein unkonzentrierter Benutzer, der zum Beispiel ein Reizsignal von einem Spurhalteassistent erhält, zunächst erschrecken und anschließend primär darauf fokussiert sein, die Kontrolle über sein Fahrzeug wiederzuerlangen. Eine in diesem Moment ausgegebene Bewegungsanweisung wird der Benutzer nicht oder nicht vollständig wahrnehmen, da seine Aufmerksamkeit in der Wiedererlangung der Fahrzeugkontrolle gebunden ist. Ein weiteres Problem tritt auf, wenn eine Unkonzentriertheit eines Benutzers nicht bereits zu Beginn des Ausgebens einer Folge von Bewegungsanweisungen, sondern erst im späteren Verlauf des Ausgebens festgestellt wird. Beispielsweise wird zwischen den Bewegungsanweisungen "In 200 Metern bitte links abbiegen" und "Jetzt links abbiegen" eine Unkonzentriertheit festgestellt und als Folge dessen ein Reizsignal ausgegeben. Dem Benutzer würden in diesem Fall die informativen Bewegungsanweisungen, in welchen das Manöver beschrieben wird, fehlen, indem er lediglich die Bewegungsanweisung "Jetzt links abbiegen" wahrnehmen kann, die zur sofortigen Ausführung des Manövers auffordert.

Die Aufgabe der Erfindung kann darin gesehen werden, sicherzustellen, dass ein Benutzer einer Navigationseinrichtung ein gemäß einer Zielführung der Navigationseinrichtung auszuführendes Manöver rechtzeitig wahrnimmt, so dass der Benutzer das Manöver sicher ausführen kann.

Die Aufgabe wird mit dem erfindungsgemäßen Verfahren zum Ausgeben einer Folge von Bewegungsanweisungen mit einer Navigationseinrichtung gelöst. Bei dem Verfahren werden die folgenden Schritte ausgeführt:
◆ Bereitstellen einer Route, die von einer Position des Benutzers zu einer Zielposition führt,
◆ Bereitstellen eines Manövers, bei dessen Ausführung der Benutzer dem Verlauf der Route folgt,
◆ Feststellen, ob der Benutzer ein Anzeichen von Unkonzentriertheit zeigt, unter Verwendung einer Sensoreinheit und,
◆ wenn festgestellt wird, dass der Benutzer kein Anzeichen von Unkonzentriertheit zeigt, Ausgeben einer ersten dem Manöver zugeordneten Folge von Bewegungsanweisungen und,
◆ wenn festgestellt wird, dass der Benutzer ein Anzeichen von Unkonzentriertheit zeigt, Ausgeben einer zweiten dem Manöver zugeordneten Folge von Bewegungsanweisungen.

Folglich wird eine einem Manöver zugeordnete Folge von Bewegungsanweisungen an einen Benutzer unter Berücksichtigung der Konzentration des Benutzers ausgegeben. Insbesondere wird an den Benutzer, wenn ein Anzeichen von Unkonzentriertheit des Benutzers festgestellt wird, eine andere Folge von Bewegungsanweisungen ausgegeben als im Normalfall, wenn kein Anzeichen von Unkonzentriertheit festgestellt wird. Dadurch, dass eine andere, als die vom Normalfall her gewohnte, Folge von Bewegungsanweisungen an den Benutzer ausgegeben wird, kann die Aufmerksamkeit des Benutzers erhöht werden. Somit kann gewährleistet werden, dass der Benutzer das Manöver rechtzeitig wahrnimmt und deshalb in die Lage versetzt wird, dass Manöver sicher auszuführen.

Mit dem erfindungsgemäßen Verfahren lässt sich unter Verwendung einer geeigneten Folge von Bewegungsanweisungen die Aufmerksamkeit eines Benutzers der Navigationseinrichtung erhalten oder erhöhen.

Die vorliegende Erfindung zielt darauf ab, eine Folge von Bewegungsanweisungen derart an den Benutzer auszugeben, dass dieser in Abhängigkeit von seinem Zustand, einschließlich seiner Konzentration, das Manöver ausführen kann, ohne sich oder andere dabei in Gefahr zu bringen.

Dazu kann sich die erste Folge von Bewegungsanweisungen im Hinblick auf die Anzahl von Bewegungsanweisungen in dieser Folge von der zweiten Folge von Bewegungsanweisungen unterscheiden. Beispielsweise weist die zweite Folge von Bewegungsanweisungen eine geringere Anzahl von Bewegungsanweisungen als die erste Folge von Bewegungsanweisungen auf.

Eine Bewegungsanweisung der ersten Folge von Bewegungsanweisungen kann einer anderen Geoposition zugeordnet sein als eine entsprechende Bewegungsanweisung der zweiten Folge von Bewegungsanweisungen. Die erste Folge von Bewegungsanweisungen kann eine Bewegungsanweisung aufweisen, die an einer Geoposition auszugeben ist, zum Beispiel 200 Meter vor dem auszuführenden Manöver, und die zweite Folge von Bewegungsanweisungen kann eine entsprechende Bewegungsanweisung aufweisen, die an einer anderen Geoposition auszugeben ist, zum Beispiel bereits 500 Meter vor dem auszuführenden Manöver.

Zu bemerken ist, dass eine Bewegungsanweisung, die zu einer ersten Folge von Bewegungsanweisungen gehört, einer anderen Bewegungsanweisung, die zu einer zweiten Folge von Bewegungsanweisungen gehört, dann entspricht, wenn beide Folgen von Bewegungsanweisungen demselben Manöver zugeordnet sind und die Anzahl von Bewegungsanweisungen der ersten Folge, welche vor der Bewegungsanweisung auszuführen sind, der Anzahl von Bewegungsanweisungen der zweiten Folge, welche vor der anderen Bewegungsanweisung auszuführen sind, entspricht. Die zweite Folge von Bewegungsanweisungen weist zum Beispiel eine Bewegungsanweisung wie "In 200 Metern bitte links in die Buchenstraße abbiegen, die Geschwindigkeit bereits jetzt auf 30 km/h reduzieren" auf, deren Inhalt sich vom Inhalt einer entsprechenden Bewegungsanweisung der ersten Folge von Bewegungsanweisungen, zu Beispiel "In 200 Metern bitte links abbiegen", die an derselben Geoposition ausgegeben wird, unterscheidet.

Das erfindungsgemäße Verfahren weist zudem einen Verfahrensschritt zum Feststellen einer Unkonzentriertheit des Benutzers auf.

Bei einer Ausführungsform der Erfindung wird zum Feststellen, ob der Benutzer ein Anzeichen von Unkonzentriertheit zeigt, ein Laut ausgewertet, den der Benutzer oder eine Begleitperson des Benutzers, zum Beispiel ein Beifahrer, abgibt. Dazu kann ein Detektieren und Überwachen einer Stimme des Benutzers oder einer Stimme einer Begleitperson des Benutzers, ausgeführt werden.

Bei einer anderen Ausführungsform der Erfindung wird der Laut erfasst, indem ein Geräusch in der Nähe des Benutzers aufgenommen wird. Aus diesem Geräusch wird der Laut unter Berücksichtigung einer Störgeräuschinformation separiert, welche unter Berücksichtigung einer Geoposition des Benutzers oder der Navigationseinrichtung bereitgestellt wird. Dies ist insbesondere dann vorteilhaft, wenn sich der Benutzer in einem Fahrzeug befindet.

Bei einer weiteren Ausführungsform der Erfindung wird die Art des Lauts bestimmt und als Indikator für Unkonzentriertheit verwendet. Ein undeutlicher Laut oder ein unnatürlicher Laut wird zum Beispiel als ein Anzeichen von Unkonzentriertheit gewertet.

Bei noch einer weiteren Ausführungsform der Erfindung wird die Störgeräuschinformation bereitgestellt, indem die Störgeräuschinformation unter Berücksichtigung der Geoposition aus einer Mehrzahl von Störgeräuschinformationen ausgewählt wird. Dazu kann die Navigationseinrichtung eine Störgeräuschdatenbank aufweisen, die eine Mehrzahl von Störgeräuschinformationen aufweist, wobei jede der Störgeräuschinformationen mit einer Geoposition verknüpft ist.

Bei noch einer weiteren Ausführungsform der Erfindung wurde die Mehrzahl von Störgeräuschinformationen beim Zurücklegen der Route (oder eines Abschnitts der Route) in der Vergangenheit gewonnen. So können die Störgeräuschinformationen auf Aufzeichnungen bei einer vorangegangenen Fahrt entlang der Route beruhen. Ferner können die Störgeräuschinformationen unter Verwendung der Navigationseinrichtung oder unter Verwendung einer anderen, zum Beispiel einer externen, Navigationseinrichtung gewonnen worden sein.

Bei noch einer weiteren Ausführungsform der Erfindung weist der Laut ein Atemgeräusch des Benutzers auf. Dazu kann ein Detektieren und Überwachen der Atmung des Benutzers durchgeführt werden.

Die Aufgabe wird ferner mit einer Navigationseinrichtung gemäß der Erfindung gelöst, welche die folgenden Bestandteile aufweist: eine Sensoreinrichtung, eingerichtet zum Feststellen, ob der Benutzer ein Anzeichen von Unkonzentriertheit zeigt, eine Recheneinheit, eingerichtet zum Bereitstellen einer Route, die von einer Position des Benutzers zu einer Zielposition führt und Bereitstellen eines Manövers, bei dessen Ausführung der Benutzer dem Verlauf der Route folgt, und einer Ausgabe- und Bedieneinheit, eingerichtet zum Ausgeben einer ersten dem Manöver zugeordneten Folge von Bewegungsanweisungen, wenn festgestellt wird, dass der Benutzer kein Anzeichen von Unkonzentriertheit zeigt, und Ausgeben einer zweiten dem Manöver zugeordneten Folge von Bewegungsanweisungen, wenn festgestellt wird, dass der Benutzer ein Anzeichen von Unkonzentriertheit zeigt.

Weitere Ausführungsformen der Erfindung sind in den abhängigen Patentansprüchen offenbart.

Die Erfindung wird nun bezugnehmend auf die folgenden Zeichnungen näher erläutert:

Figur 1 zeigt ein Blockschema einer Navigationseinrichtung 100 gemäß einer Ausführungsform der Erfindung.

Figur 2 zeigt eine schematische Darstellung einer Ausführungsform des erfindungsgemäßen Verfahrens.

Figur 3 zeigt eine schematische Draufsicht auf eine Straßenanordnung mit einer ersten Folge von Bewegungsanweisungen und einer zweiten Folge von Bewegungsanweisungen gemäß einer Ausführungsform des erfindungsgemäßen Verfahrens.

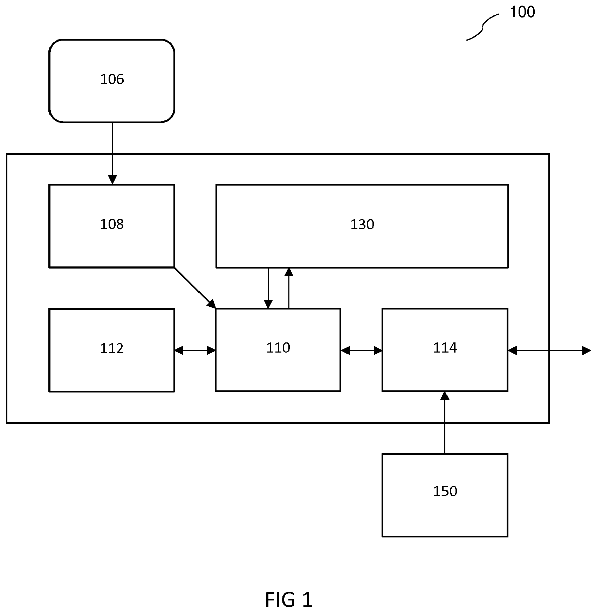

Im Folgenden wird die Erfindung Bezug nehmend auf **Figur 1** näher erläutert, welche ein Blockschema einer Navigationseinrichtung 100 gemäß einer Ausführungsform der Erfindung zeigt. Die Navigationseinrichtung 100 kann mit einem Fahrzeug fest verbunden sein, indem die Navigationseinrichtung 100 in oder an dem Fahrzeug angebracht ist, zum Beispiel am Fahrzeug angebaut oder im Fahrzeug eingebaut ist. Alternativ dazu kann die Navigationseinrichtung einfach von einem Fahrzeug abnehmbar oder einfach aus einem Fahrzeuginneren entnehmbar sein, beispielsweise als tragbares Gerät oder Bestandteil eines tragbaren Geräts.

Die Navigationseinrichtung 100 weist die folgenden Funktionsmodule auf: eine Empfangseinheit 106, eine Positionsbestimmungseinheit 108, eine Recheneinheit 110, eine Speichereinheit 112, eine Schnittstelleneinheit 114, eine Ausgabe- und Bedieneinheit 130 und eine Sensoreinheit 150.

Die Positionsbestimmungseinheit 108 ist als ein GPS-Empfänger ausgebildet, welcher mit der Empfangseinheit 106 verbunden ist, die in Form einer GPS-Antenne vorliegt. Die Positionsbestimmungseinheit 108 kann eine Geoposition, welche von geografischen Koordinaten eines Standorts der Navigationseinrichtung 100 repräsentiert wird, aus Satellitensignalen gewinnen, welche mittels der Empfangseinheit 106 empfangen werden, und die Geoposition an die Recheneinheit 110 übermitteln.

Bei einer Ausführungsform der Erfindung wird anstelle des GPS-Empfängers eine andere Art von Positionsbestimmungseinheit verwendet, zum Beispiel ein GALILEO-Empfänger, der mit einer kompatiblen GALILEO-Empfangseinheit ausgestattet ist.

Bei einer anderen Ausführungsform der Erfindung kann die Positionsbestimmungseinheit örtlich getrennt von der Navigationseinrichtung vorliegen, zum Beispiel als separate Einrichtung oder als Bestandteil einer separaten Einrichtung. In diesem Fall kann die Positionsbestimmungseinheit unter Verwendung der Schnittstelleneinheit mit der Recheneinheit gekoppelt sein, zum Beispiel über eine drahtlose Datenverbindung.

Die Speichereinheit 112 verfügt über einen nichtflüchtigen Speicher in Form eines EEPROMs (Electrically Erasable Programmable Read-Only Memory). Alternativ dazu kann die Speichereinheit 112 auch eine andere Speicherform aufweisen, zum Beispiel einen Flash-EEPROM oder eine Festplatte. Ferner kann die Speichereinheit 112 über mehrere der genannten Speicher verfügen.

In der Speichereinheit 112 ist eine Landkartendatenbank gespeichert, welche eine Mehrzahl von Landkartendaten enthält. Die Landkartendaten repräsentieren Objekte, die sich in einem bestimmten geografischen Gebiet befinden. Zu den Objekten zählen Straßen, Wege, Gebäude, Plätze, Eisenbahnlinien, Gewässer, Brücken, Tunnel, Geländeformen, Gemarkungen, Landesgrenzen, Ortschaften, Geschwindigkeitsbegrenzungen, Verkehrsregelungen, Parkmöglichkeiten und Raststätten. Optional kann die Speichereinheit 112 eine Störgeräuschdatenbank mit einer Mehrzahl von Störgeräuschinformationen und einer Mehrzahl von Geopositionen aufweisen, wobei jede der Störgeräuschinformationen mit einer der Geopositionen verknüpft ist.

Die Schnittstelleneinheit 114 ist eingerichtet, einen Datensatz und/oder ein Signal an eine andere Einrichtung zu übergeben, zum Beispiel unter Verwendung eines Kommunikationsprotokolls.

Die Ausgabe- und Bedieneinheit 130 weist einen Berührungsbildschirm, ein Tastenfeld, eine Sprachausgabeeinrichtung mit einem Lautsprecher und eine Spracheingabeeinrichtung mit einem Mikrofon auf. Unter dem Begriff "Tastenfeld" ist hierin eine Mehrzahl von mechanischen Bedienelementen zu verstehen, zum Beispiel Tasten, Schalter oder Drehregler. Die Ausgabe- und Bedieneinheit 130 ist unter anderen in der Lage, Routeninformationen und Bewegungsanweisungen, insbesondere Fahranweisungen, an einen Benutzer der Navigationseinrichtung 100 auszugeben. Ferner ist die Ausgabe- und Bedieneinheit 130 zum Eingeben von Bedienbefehlen, Routenoptionen und Zielen durch den Benutzer eingerichtet. Weiterhin ist die Ausgabe- und Bedieneinheit 130 in der Lage, eine erste einem Manöver zugeordnete Folge von Bewegungsanweisungen an einen Benutzer auszugeben, wenn festgestellt wird, dass der Benutzer kein Anzeichen von Unkonzentriertheit zeigt, und eine zweite dem Manöver zugeordnete Folge von Bewegungsanweisungen an den Benutzer auszugeben, wenn festgestellt wird, dass der Benutzer ein Anzeichen von Unkonzentriertheit zeigt.

Die Sensoreinheit 150 weist ein Mikrofon auf, welches zum Beispiel im Innenraum eines Fahrzeugs angeordnet ist. Die Sensoreinheit 150 erfasst ein Geräusch, zum Beispiel einen Laut des Benutzers, und übermittelt das Geräusch an die Recheneinheit 110. Die Sensoreinheit 150 ist ferner eingerichtet, eine Lautstärke bzw. einen Lautstärkepegel eines Geräuschs zu detektieren und an die Recheneinheit 110 weiterzuleiten.

Zusätzlich ist die Sensoreinheit 150 in der Lage festzustellen, ob der Benutzer ein Anzeichen von Unkonzentriertheit zeigt, zum Beispiel Müdigkeit. Dazu notwendige Informationen können der Recheneinheit 110 zugeführt werden.

Die Sensoreinheit 150 liegt örtlich getrennt vom Rest der Navigationseinrichtung 100 vor, zum Beispiel als separate Einrichtung oder als Bestandteil einer separaten Einrichtung. Insbesondere kann die Sensoreinheit 150 ein Bestandteil einer fahrzeugeigenen Freisprecheinrichtung sein. Die Sensoreinheit 150 kann mit dem Fahrzeug fest verbunden sein. Alternativ dazu kann die Sensoreinheit einfach von dem Fahrzeug abnehmbar oder einfach aus dem Fahrzeuginneren entnehmbar sein, beispielsweise als tragbares Gerät oder Bestandteil eines tragbaren Geräts wie eines Mobiltelefons. Die Sensoreinheit 150 ist unter Verwendung der Schnittstelleneinheit 114 mit der Recheneinheit 110 gekoppelt, zum Beispiel mittels eines (Fahrzeug-)Bussystems oder über eine drahtlose Datenverbindung.

Bei einer Ausführungsform der Erfindung weist die Sensoreinheit eine Mehrzahl von Mikrofonen auf. So gehören zum Beispiel ein Mikrofon einer Freisprecheinrichtung und ein Mikrofon eines Mobiltelefons zu der Sensoreinheit.

Die Recheneinheit 110 ist die zentrale Steuereinheit der Navigationseinrichtung 100. Sie verfügt neben einem Prozessor (Central Processing Unit, CPU) über einen Arbeitsspeicher (Random Access Memory, RAM), welcher zum flüchtigen Speichern von Variablen und Zwischenergebnissen dient. Der Prozessor und der Arbeitsspeicher sind auf einem integrierten Schaltkreis vereinigt. Alternativ dazu können der Prozessor und der Arbeitsspeicher separat voneinander angeordnet sein, zum Beispiel jeweils auf einem anderen integrierten Schaltkreis. Die Recheneinheit 110 ist mit der Ausgabe- und Bedieneinheit 130 derart verbunden, dass Benutzereingaben an die Recheneinheit 110 übertragen werden können und in der Recheneinheit 110 erzeugte Informationen an die Ausgabe- und Bedieneinheit 130 übertragen werden können.

Die Recheneinheit 110 ist zum Bereitstellen einer Route, die von einer Position des Benutzers zu einer Zielposition führt, eingerichtet. Dafür verwendet die Recheneinheit 110 die in der Speichereinheit 112 gespeicherten Landkartendaten. Alternativ dazu kann die Recheneinheit die für das Bereitstellen einer Route notwendigen Landkartendaten aus einer externen Speichereinheit (nicht gezeigt) beziehen, zum Beispiel unter Verwendung einer Internetverbindung. Im Rahmen einer Zielführung ist die Recheneinheit 110 zudem in der Lage, ein Manöver bereitzustellen, bei dessen Ausführung der Benutzer dem Verlauf der Route folgt.

Die Recheneinheit 110 ist eingerichtet, ein erfasstes Geräusch dahingehend zu analysieren, ob der Benutzer ein Anzeichen von Unkonzentriertheit zeigt. Die Analyse untersucht die einzelnen Laute und deren Lautstärke des Geräuschs. Unter dem Begriff Lautstärke ist hierin die physikalisch messbare Amplitude oder Stärke des Schalls zu verstehen.

Wenn der Benutzer ein Anzeichen von Unkonzentriertheit zeigt, ist die Recheneinheit 110 in der Lage, anstelle einer ersten einem Manöver zugeordneten Folge von Bewegungsanweisungen eine zweite dem Manöver zugeordnete Folge von Bewegungsanweisungen zu generieren und an die Ausgabe- und Bedieneinheit 130 weiterzuleiten.

Bei der Figur 1 gezeigten Navigationseinrichtung 100 sind die Funktionsmodule Positionsbestimmungseinheit 108, Recheneinheit 110, Speichereinheit 112, Schnittstelleneinheit 114 und Ausgabe- und Bedieneinheit 130 in einem gemeinsamen Gehäuse oder auf einem gemeinsamen Schaltkreis integriert. Bei einer anderen Ausführungsform der Erfindung liegt eines der Funktionsmodule separat vor, zum Beispiel als eigenständige Einrichtung oder als Bestandteil einer anderen Einrichtung. Bei einer weiteren Ausführungsform der Erfindung ist die Sensoreinheit in das gemeinsame Gehäuse oder in den gemeinsamen Schaltkreis integriert.

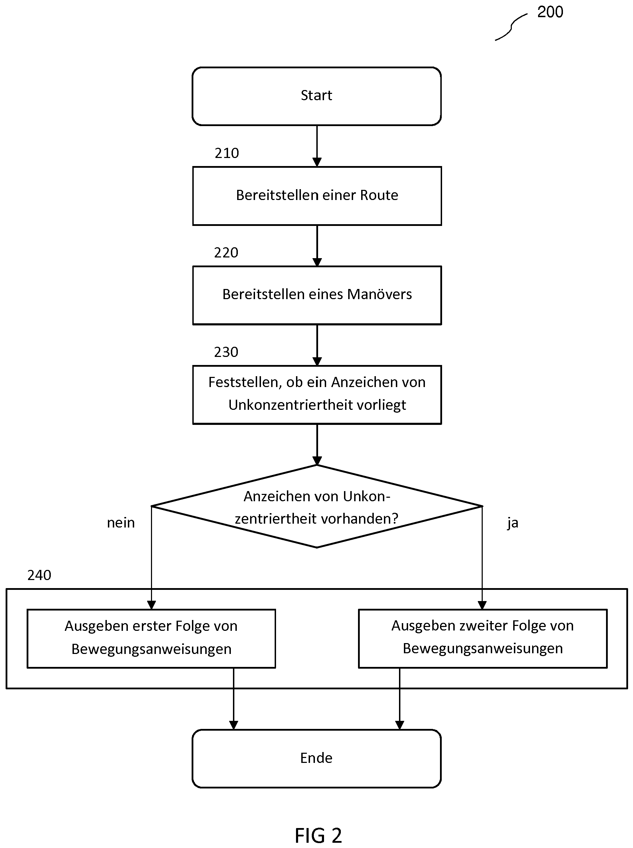

Im Folgenden wird die Erfindung Bezug nehmend auf **Figur 2** näher beschrieben, welche eine Ausführungsform des erfindungsgemäßen Verfahrens in Form eines ersten Ablaufschemas 200 darstellt. Das Verfahren wird unter Verwendung der in Figur 1 gezeigten Navigationseinrichtung 100 ausgeführt.

Nach dem Start des Verfahrens wird bei einem ersten Verfahrensschritt 210 eine Route, die von einer Position eines Benutzers zu einer Zielposition führt, bereitgestellt. Dazu definiert der Benutzer unter Verwendung der Ausgabe- und Bedieneinheit 130 Routenoptionen und Ziele, auf deren Grundlage die Route mittels der Recheneinheit 110 berechnet wird. Alternativ dazu kann der Benutzer eine außerhalb der Navigationseinrichtung, berechnete Route importieren, zum Beispiel von einer mobilen Speichereinheit.

Bei einem zweiten Verfahrensschritt 220 wird ein Manöver bereitgestellt, bei dessen Ausführung der Benutzer dem Verlauf der Route folgt. Dazu wird zunächst eine Zielführung der Navigationseinrichtung 100 aktiviert.

Das Manöver wird unter Zuhilfenahme einer Bewegungsanweisung beschrieben. Der Benutzer wird darin angewiesen, wie das Manöver auszuführen ist. Die Bewegungsanweisung kann eine Beschreibung des Manövers, eine Orts-, Zeit- und/oder Entfernungsangabe bezogen auf das Manöver und/oder eine Zusatzinformation bezogen auf das Manöver aufweisen. Das Manöver soll damit für den Benutzer besser nachvollziehbar sein.

Bei einem dritten Verfahrensschritt 230 wird unter Verwendung der Sensoreinheit 150 festgestellt, ob der Benutzer ein Anzeichen von Unkonzentriertheit zeigt. Dazu wird ein Laut ausgewertet, den der Benutzer oder eine Begleitperson des Benutzers abgibt. Der Laut wird erfasst, indem ein Geräusch in der Nähe des Benutzers aufgenommen wird und aus dem Geräusch der Laut unter Berücksichtigung einer Störgeräuschinformation separiert wird, die unter Berücksichtigung einer Geoposition, an der sich der Benutzer der Navigationseinrichtung 100 befindet, bereitgestellt wird.

Bei einem ersten Teilschritt des dritten Verfahrensschritts 230 wird unter Verwendung der Sensoreinheit 150 ein Geräusch im Fahrzeuginnenraum erfasst. Das Geräusch weist einen ersten Geräuschanteil auf, der eine Person, zum Beispiel den Benutzer oder eine Begleitperson des Benutzers, als Geräuschquelle hat. Der erste Geräuschanteil weist einen einzelnen Laut oder eine Mehrzahl von Lauten wie bei einem Gespräch auf.

Das Geräusch weist zudem einen zweiten Geräuschanteil auf. Der zweite Geräuschanteil weist ein Hintergrundgeräusch, d.h. einen nicht von dem Benutzer erzeugten Laut, auf, zum Beispiel ein Windgeräusch, ein Motorgeräusch und/oder ein Abrollgeräusch.

Bei einem zweiten Teilschritt des dritten Verfahrensschritts 230 wird unter Zuhilfenahme eines bestimmten Algorithmus der erste Geräuschanteil aus dem erfassten Geräusch extrahiert. Das Geräusch wird dahingehend ausgewertet, ob ein Laut wie ein Gespräch und ein Hintergrundgeräusch vorliegen. Dazu werden unter Verwendung der Schnittstelleneinheit 114 diverse Fahrzeugparameter abgefragt, zum Beispiel ob das Fahrzeug bewegt wird und damit ein Abrollgeräusch vorliegt.

Für den Fall, dass aufgrund der Fahrzeugbewegung ein Abrollgeräusch vorliegt, wird dieses mittels einer Störgeräuschinformation charakterisiert. Das Abrollgeräusch weist zum Beispiel eine typische Tonalität auf, die im Wesentlichen durch eine Fahrgeschwindigkeit und einen befahrenen Untergrund beeinflusst wird. Die Störgeräuschinformation repräsentiert eine Hilfsgröße, die den Algorithmus beim Extrahieren des ersten Geräuschanteils von dem erfassten Geräusch vorteilhaft unterstützt.

Die Störgeräuschinformation wird mittels der in der Speichereinheit 112 abgelegten Störgeräuschdatenbank bereitgestellt, wobei die Geoposition berücksichtigt wird, an der sich die Navigationseinrichtung 100 befindet. Alternativ dazu kann die Störgeräuschinformation von einer externen Einrichtung verfügbar gemacht werden, zum Beispiel von einer mobilen Speichereinheit.

Zum Bereitstellen der Störgeräuschinforation wurde ein erfasstes Geräusch unter Verwendung der Recheneinheit 110 derart verarbeitet, dass eine Störgeräuschinformation erhalten wurde, die das Hintergrundgeräusch charakterisiert. Die Störgeräuschinformation wurde mit einer Geoposition verknüpft und in der Speichereinheit abgelegt, wobei die Geoposition beschreibt, an welchen geografischen Koordinaten das Hintergrundgeräusch erfasst wurde. Somit beruht die Störgeräuschinformation zum Beispiel auf einer Aufzeichnung bei einer vorangegangenen Fahrt entlang der Route.

Das Fahrzeug wird zum Beispiel auf einer in der Landkartendatenbank enthaltenen Ahornstraße bewegt. Ein erster Abschnitt der Ahornstraße ist asphaltiert. Das Abrollgeräusch weist in diesem Fall eine Tonalität und ein Spektrum auf, die mit einer ersten Störgrößeninformation sgi-1 charakterisiert wird, wobei das Spektrum des Abrollgeräusches beschreibt, welche Frequenzanteile im Abrollgeräusch enthalten sind. Es lassen sich tonale und rauschartige breitbandige Bestandteile des Abrollgeräuschs unterscheiden. Ein folgender zweiter Abschnitt der Ahornstraße weist einen Belag aus Kopfsteinpflaster auf. Das Abrollgeräusch weist in diesem Fall eine andere Tonalität und ein anderes Spektrum auf, die mit einer zweiten Störgrößeninformation sgi-2 charakterisiert wird, wobei die zweite Störgrößeninformation sgi-2 ein lauteres Abrollgeräusch charakterisiert als die erste Störgrößeninformation sgi-1. Ein anschließender dritter Abschnitt der Ahornstraße ist wiederum asphaltiert. Somit weist das Abrollgeräusch eine weitere Tonalität und ein weiteres Spektrum auf, die mit einer dritten Störgrößeninformation sgi-3 charakterisiert wird. Die erste Störgrößeninformation sgi-1 kann der dritten Störgrößeninformation sgi-3 entsprechen, da beide ein Abrollgeräusch des Fahrzeugs auf Asphalt charakterisieren.

Die erste Störgrößeninformation sgi-1 wird einer ersten Geoposition zugeordnet, die den ersten Abschnitt der Ahornstraße repräsentiert. Die zweite Störgrößeninformation sgi-2 wird einer zweiten Geoposition zugeordnet, die den zweiten Abschnitt der Ahornstraße repräsentiert, zum Beispiel den Anfang des zweiten Abschnitts. Der Anfang des zweiten Abschnitts kann zum Beispiel durch eine Änderung des Abrollgeräuschs bestimmt werden. Die dritte Störgrößeninformation sgi-3 wird einer dritten Geoposition zugeordnet, die den dritten Abschnitt der Ahornstraße repräsentiert, zum Beispiel einen Anfang des dritten Abschnitts.

Bei einer anderen Ausführungsform der Erfindung weist die Störgeräuschdatenbank eine Mehrzahl von Störgeräuschinformationen und eine Mehrzahl von Störgeräuschsituationen auf, wobei jeder der Störgeräuschsituationen eine Störgeräuschinformation zugeordnet ist. Eine Störgeräuschsituation liegt zum Beispiel vor, wenn das Fahrzeug auf einer Straße mit Belag aus Kopfsteinpflaster bewegt wird. Die ein Abrollgeräusch auf Kopfsteinpflasterbelag charakterisierende Störgrößeninformation sgi-2 kann für diese und alle vergleichbaren Störgeräuschsituationen, d.h. wenn das Fahrzeug auf einer Straße mit Kopfsteinpflasterbelag bewegt wird, verwendet werden.

Das individuelle Zuordnen einer Störgrößeninformation zu einer Geoposition ermöglicht ein Kartieren der Hintergrundgeräusche analog zu den Landkartendaten. Somit kann für jede durch die Landkartendaten beschriebene Position dank der Störgrößeninformation festgestellt werden, ob ein Hintergrundgeräusch vorliegt und wenn ja, wie das Hintergrundgeräusch ausgeprägt ist.

Ein definiertes Hintergrundgeräusch wirkt vorteilhaft beim Extrahieren eines Lauts des Benutzers aus dem erfassten Geräusch. Führt der Benutzer zum Beispiel ein Gespräch, während das Fahrzeug wie oben beschrieben auf der Ahornstraße bewegt wird, ist ein Laut, den der Benutzer im zweiten Abschnitt der Ahornstraße äußert, aufgrund des lauteren Hintergrundgeräuschs schwerer zu extrahieren als ein Laut, den der Benutzer im ersten Abschnitt oder im dritten Abschnitt der Ahornstraße äußert. Die zweite Störgeräuschinformation sgi-2 definiert das Hintergrundgeräusch im zweiten Abschnitt, so dass die Recheneinheit 110 auf das Hintergrundgeräusch im zweiten Abschnitt eingestellt wird und somit den Laut des Benutzers in dem erfassten Geräusch effektiv extrahieren kann. Die Störgeräuschinformation sgi-2 weist zum Beispiel eine bestimmte Frequenz für ein Abrollgeräusch auf Kopfsteinpflaster auf, die von dem erfassten Geräusch zu filtern ist, um den Laut möglichst unverfälscht darzustellen.

Für den Fall, dass der gepflasterte zweite Abschnitt einen Belag aus Asphalt erhält und somit ein verändertes Abrollgeräusch vorliegt, wird aufgrund der veränderten Tonalität eine neue zweite Störgrößeninformation sgi-2.1 bestimmt, welche die in der Speichereinheit 112 vorhandene, das Abrollgeräusch auf Kopfsteinpflaster charakterisierende Störgrößeninformation sgi-2 ersetzt. Die Navigationseinrichtung 100 ist demnach in der Lage, die Störgeräuschdatenbank aktuell zu halten. Die Navigationseinrichtung 100 ist ferner dazu eingerichtet, einem Straßenabschnitt, der noch keine Störgeräuschinformation aufweist, eine Störgeräuschinformation zuzuordnen.

Bei einer Ausführungsform der Erfindung wird eine in der Störgrößendatenbank der Navigationseinrichtung gespeicherte Störgrößeninformation für eine andere Navigationseinrichtung verfügbar gemacht. Dazu wird die Störgrößeninformation zum Beispiel auf einem Server abgelegt.

Bei einem dritten Teilschritt des dritten Verfahrensschritts 230 wird der Laut von dem erfassten Geräusch separiert. Dazu wird unter Verwendung der Störgrößeninformation, die unter Berücksichtigung der Geoposition aus einer Mehrzahl von Störgrößeninformationen ausgewählte wurde, das neben dem Laut vorliegende Hintergrundgeräusch derart herausgefiltert, dass der Laut weitgehend frei vom Einfluss anderer Geräuschanteile verfügbar gemacht wird. Zu bemerken ist, dass die hierin beschriebenen Methoden, einen Laut eines Benutzers einer Navigationseinrichtung 100 oder einer Begleitperson des Benutzers der Navigationseinrichtung 100 zu erfassen, nicht nur beim Ausgeben einer Folge von Bewegungsanweisungen an den Benutzer eingesetzt werden können. Vielmehr können die Methoden auch dafür eingesetzt werden, einen von dem Benutzer oder seiner Begleitperson ausgesprochenen Bedienbefehl zu erfassen. Der Bedienbefehl kann unter anderem zur Bedienung der Navigationseinrichtung 100, eines Moduls eines Fahrzeugs, in oder auf welchem sich der Benutzer befindet, oder einer anderen Einrichtung des Benutzers verwendet werden. Ferner können die Methoden dafür eingesetzt werden, eine von dem Benutzer oder seiner Begleitperson ausgesprochene Nachricht zu erfassen. Die Nachricht kann unter anderem mittels der Navigationseinrichtung 100, mittels eines Moduls des Fahrzeugs, in oder an dem sich der Benutzer befindet, oder mittels einer anderen Einrichtung des Benutzers verarbeitet werden.

Bei einem vierten Teilschritt des dritten Verfahrensschritts 230 wird der Laut des Benutzers ausgewertet. Im vorliegenden Fall wird das Gespräch des Benutzers dahingehend analysiert, ob eine Änderung in der Gesprächslautstärke festgestellt werden kann. Ein Abnehmen der Gesprächslautstärke wird mit dem Unterschreiten eines Grenzwertes signifikant, d.h. wenn der Grenzwert unterschritten wird, wird davon ausgegangen, dass ein Anzeichen von Unkonzentriertheit vorliegt. Der Grenzwert ist auf eine Referenzlautstärke bezogen, zum Beispiel 20% der Lautstärke der Referenzlautstärke. Alternativ dazu kann der Grenzwert durch eine fest vorgegebene Lautstärke, zum Beispiel eine Mindestlautstärke, definiert sein.

Optional wird das Mikrofon mittels der Recheneinheit 110 zu einem bestimmten Zeitpunkt justiert, zum Beispiel beim Aktivieren der Navigationseinrichtung 100 oder wiederkehrend in einem definierten Zeitabstand. Somit wird die Referenzlautstärke, d.h. eine Ausgangslautstärke, erhalten.

Bei einer Ausführungsform der Erfindung ist die Recheneinheit eingerichtet, eine Art eines Lauts, zum Beispiel seine Aussprache, auszuwerten. Wird zum Beispiel ein Gespräch detektiert, bei welchem der Benutzer im Gesprächsverlauf eine zunehmende Anzahl undeutlicher oder unnatürlicher Laute äußert, wird davon ausgegangen, dass ein Anzeichen von Unkonzentriertheit vorliegt.

Bei einer weiteren Ausführungsform der Erfindung ist die Recheneinheit eingerichtet, eine Folge von Lauten wie einen Gesprächsdialog auszuwerten. Zeigt zum Beispiel der Benutzer bei an ihn gerichteten Fragen ein verändertes oder unnatürliches Antwortverhalten wie ein zunehmendes Abschweifen vom Thema oder ein Antworten ohne Bezug zur Frage, wird davon ausgegangen, dass ein Anzeichen von Unkonzentriertheit vorliegt.

Bei noch einer weiteren Ausführungsform der Erfindung ist die Recheneinheit eingerichtet, eine Folge von Lauten wie eine Sprechweise auszuwerten. Wird eine unnatürliche Sprechweise, zum Beispiel ein hektischer, abgehackter oder gepresster Ausdruck, des Benutzers detektiert, wird davon ausgegangen, dass ein Anzeichen von Unkonzentriertheit vorliegt. Alternativ dazu wird bei noch einer weiteren Ausführungsform der Erfindung vom Vorliegen eines Anzeichens von Unkonzentriertheit ausgegangen, wenn ein lebhaftes Gespräch erfasst wird, in welches der Benutzer verwickelt ist.

Bei einem vierten Verfahrensschritt 240 kann eine erste Folge von Bewegungsanweisungen ausgegeben werden, wenn beim Benutzer kein Anzeichen von Unkonzentriertheit vorliegt. Die erste Folge von Bewegungsanweisungen kann eine Standardfolge von Bewegungsanweisungen sein, die für ein bestimmtes Manöver immer gleich ist. Die Standardfolge von Bewegungsanweisungen weist demnach standardisierte Bewegungsanweisungen auf, die bezogen auf ein Manöver immer in einem definierten Zeitabstand und/oder in einer definierten Entfernung ausgegeben werden.

Die erste Folge von Bewegungsanweisungen weist etwa die Bewegungsanweisungen "Demnächst bitte links abbiegen", "In 200 Metern bitte links abbiegen" und "Jetzt links abbiegen" auf. Wenn der Benutzer der Navigationseinrichtung 100 konzentriert ist, nimmt er die erste Folge von Bewegungsanweisungen wahr und führt Handlungen gemäß den Bewegungsanweisungen aus.

Im vorliegenden Beispiel liegt bei dem Benutzer eine Müdigkeit als ein Anzeichen von Unkonzentriertheit vor. Somit besteht die Gefahr, dass der Benutzer die Anweisungen, die ihm in Form der Bewegungsanweisungen gegeben werden, nicht verstehen oder nicht nachvollziehen und daher die für das Manöver notwendigen Handlungen nicht wie erforderlich ausführen kann. Darum wird bei dem vierten Verfahrensschritt 240 eine zweite Folge von Bewegungsanweisungen an den Benutzer ausgegeben, weil ein Anzeichen von Müdigkeit festgestellt wurde.

Die zweite Folge von Bewegungsanweisungen weist die Bewegungsanweisungen "In ca. 2 Minuten an der Kreuzung Ahornstraße/Buchenstraße links abbiegen", "In 200 Metern bitte links in die Buchenstraße abbiegen, die Geschwindigkeit bereits jetzt auf 30 km/h reduzieren" und "Jetzt links abbiegen, bitte dabei auf mögliche entgegenkommende Fahrzeuge achten" auf. Die zweite Folge von Bewegungsanweisungen weist gegenüber der ersten Folge von Bewegungsanweisungen erweiterte Bewegungsanweisungen auf, die eine Zusatzinformation enthalten. Die Zusatzinformation stellt dem müden Benutzer einen zusätzlichen Anhaltspunkt bereit, mit dem das Nachvollziehen der Manöverbeschreibung für ihn erleichtert wird, wenn er zu Beginn der Bewegungsanweisung unaufmerksam war.

Insbesondere weist die zweite Folge von Bewegungsanweisungen eine Mehrzahl von Bewegungsanweisungen auf, deren jeweiliger Inhalt sich vom Inhalt einer entsprechenden Bewegungsanweisung der ersten Folge von Bewegungsanweisungen, die an derselben Geoposition ausgegeben wird, unterscheidet.

Bei einer anderen Ausführungsform der Erfindung wird eine Bewegungsanweisung der zweiten Folge von Bewegungsanweisungen an einer anderen Geoposition ausgegeben als eine entsprechende Bewegungsanweisung der ersten Folge von Bewegungsanweisungen. So kann die bei der ersten Folge von Bewegungsanweisungen ausgegebene Bewegungsanweisung "In 200 Metern bitte links abbiegen", ausgegeben in einer Entfernung von 200 Meter vor dem auszuführenden Manöver, bei der zweiten Folge von Bewegungsanweisungen bereits in einer Entfernung von 500 Meter vor dem auszuführenden Manöver ausgegeben werden und somit "In 500 Metern bitte links abbiegen" lauten.

Bei einer weiteren Ausführungsform der Erfindung weist die zweite Folge von Bewegungsanweisungen gegenüber der ersten Folge von Bewegungsanweisungen eine zusätzliche Bewegungsanweisung auf. Die zusätzliche Bewegungsanweisung kann eine Wiederholung einer bereits ausgegebenen Bewegungsanweisung sein. Die zweite Folge von Bewegungsanweisungen kann zum Beispiel die Bewegungsanweisung "In 200 Metern bitte links abbiegen" und "In 500 Metern bitte links abbiegen" aufweisen, wobei beide auf dasselbe Manöver bezogen sind. Alternativ dazu kann die zweite Folge von Bewegungsanweisungen eine ergänzende Bewegungsanweisung aufweisen, zum Beispiel "Bitte in 100 Metern in die Linksabbiegespur einfädeln." Bei noch einer weiteren Ausführungsform der Erfindung weist die erste Folge von Bewegungsanweisungen eine Bewegungsanweisung auf, die die zweite Folge von Bewegungsanweisungen nicht aufweist.

Bei der vorliegenden Ausführungsform der Erfindung weisen die erste Folge von Bewegungsanweisungen und die zweite Folge von Bewegungsanweisungen jeweils mehrere Bewegungsanweisungen auf. Bei einer anderen Ausführungsform der Erfindung weist die erste Folge von Bewegungsanweisungen oder die zweite Folge von Bewegungsanweisungen nur eine einzelne Bewegungsanweisung auf. Bei einer weiteren Ausführungsform der Erfindung weisen die erste Folge von Bewegungsanweisungen und die zweite Folge von Bewegungsanweisungen jeweils nur eine einzelne Bewegungsanweisung auf.

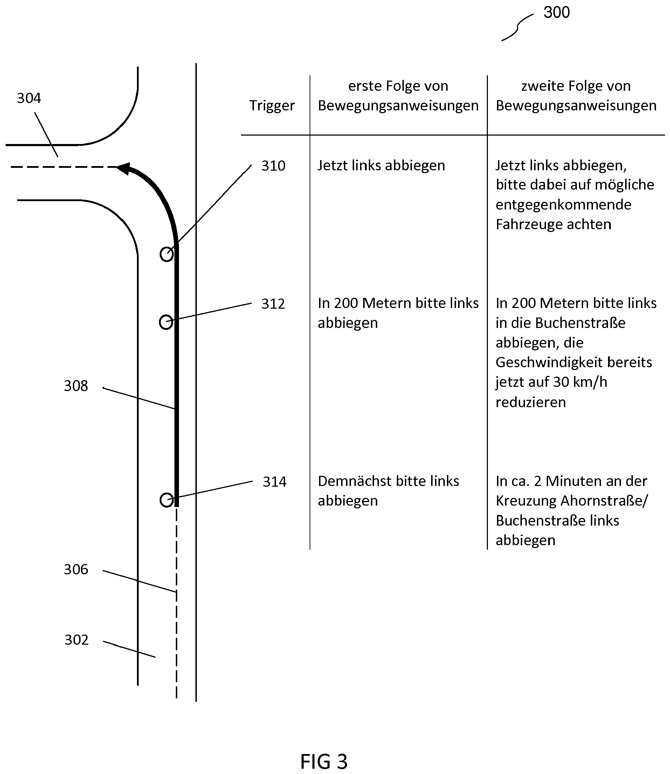

Im Folgenden wird die Erfindung Bezug nehmend auf **Figur 3** näher beschrieben, welche eine Straßenanordnung mit einer ersten Folge von Bewegungsanweisungen und einer zweiten Folge von Bewegungsanweisungen zeigt. Die ersten Folge von Bewegungsanweisungen und die zweite Folge von Bewegungsanweisungen werden mit dem Verfahren generiert, das Bezug nehmend auf Figur 2 beschrieben wurde.

Ein Fahrzeug (nicht gezeigt) wird entlang einer Route 306 bewegt, wobei das Fahrzeug gemäß einer Zielführung von der Ahornstraße 302 in die Buchenstraße 304 abbiegen soll. Dazu muss der Benutzer des Fahrzeugs mit der Navigationseinrichtung 100 ein Manöver ausführen. An den Benutzer wird eine Folge von Bewegungsanweisungen ausgegeben, die das auszuführende Manöver beschreibt. Jeder der Bewegungsanweisungen ist ein Trigger zugeordnet, der das Ausgeben der jeweiligen Bewegungsanweisung veranlasst. Die geführte Strecke 308 repräsentiert den Bereich der Route 306, auf dem der Benutzer mittels der Folge von Bewegungsanweisungen geführt wird.

Der Trigger 310 ist vor der Kreuzung Ahornstraße/Buchenstraße angeordnet und veranlasst die Ausgabe einer Bewegungsanweisung, welche den Benutzer auffordert, das Manöver sofort auszuführen. Dem Trigger 310 vorgelagert ist der Trigger 312, welcher in einer Entfernung von 200 Metern bis zum Manöver die Ausgabe einer weiteren Bewegungsanweisung an den Benutzer auslöst, in welcher der Benutzer nähere Informationen zu dem vorzunehmende Manöver vermittelt werden. Dem Trigger 312 geht ein Trigger 314 voraus, welcher in einer zeitlichen Entfernung von 2 Minuten bis zum Manöver die Ausgabe noch einer weiteren Bewegungsanweisung an den Benutzer bewirkt, mit welcher der Benutzer auf das Manöver vorbereitet wird.

In einer Tabelle in Figur 3 sind beispielhaft die Bewegungsanweisungen der ersten Folge von Bewegungsanweisungen und der zweiten Folge von Bewegungsanweisungen aufgeführt, die an den Benutzer zu den jeweiligen Triggern entlang der geführten Strecke 308 ausgegeben werden, wobei die Ausgabe wie zuvor beschrieben vom Feststellen eines Anzeichens von Unkonzentriertheit beim Benutzer abhängt.

Bei einer Ausführungsform der Erfindung hat die zweite Folge von Bewegungsanweisungen einen weiteren Trigger, zum Beispiel einen zwischen dem Trigger 310 und Trigger 312 angeordneten, Trigger. Dieser kann eine zusätzliche Bewegungsanweisung veranlassen, die den Benutzer auffordert, sich in 100 Metern in die Linksabbiegespur einzufädeln.

Das erfindungsgemäße Verfahren ermöglicht, den Benutzer der Navigationseinrichtung 100 wach zu halten, wenn der Benutzer ein Anzeichen von Müdigkeit zeigt, indem eine angepasste zweite Folge von Bewegungsanweisungen ausgegeben wird. Die erfindungsgemäße Navigationseinrichtung 100 operiert für den unkonzentrierten Benutzer wie ein Reisebegleiter, der dem Benutzer neben den notwendigen Bewegungsanweisungen zur Manöverbeschreibung einen zusätzlichen Anhaltspunkt zur Verfügung stellt, der die Aufmerksamkeit des Benutzers fördert. Der zusätzliche Anhaltpunkt kann eine Zusatzinformation, ein Wiederholen einer Bewegungsanweisung und/oder ein Ausgeben einer zusätzlichen Bewegungsanweisung sein.

Bei einer anderen Ausführungsform der Erfindung weist die Ausgabe- und Bedieneinheit für eine Ausgabe einer Bewegungsanweisung der zweiten Folge von Bewegungsanweisungen eine andere Konfiguration als für eine Ausgabe einer entsprechenden Bewegungsanweisung der ersten Folge von Bewegungsanweisungen auf. Die Ausgabe der Bewegungsanweisung der zweiten Folge von Bewegungsanweisungen kann eine auffälligere visuelle Darstellung, zum Beispiel durch Verwenden von Signalfarben, eine andere akustische Ausgabe, zum Beispiel durch einen Wechsel von einer männlichen Ansagestimme zu einer weiblichen Ansagestimme, eine geänderte Ausgabelautstärke und/oder ein hinzugefügtes akustisches Merkmal wie ein eine Bewegungsanweisung einleitendes Fanfarengeräusch aufweisen. Dem Benutzer sollen somit weitere visuelle Anhaltspunkte oder akustische Anhaltspunkte zur Verfügung gestellt, die zur Förderung seiner Aufmerksamkeit dienen.

Bei einer weiteren Ausführungsform der Erfindung wird ein Anzeichen von Unkonzentriertheit des Benutzers unter Zuhilfenahme einer zusätzlichen Einrichtung, zum Beispiel einer Kameraeinheit, festgestellt. Die Kameraeinheit verifiziert hierbei das mittels der Sensoreinheit festgestellte Anzeichen von Unkonzentriertheit.

## Patentansprüche

1. Verfahren zum Ausgeben einer Folge von Bewegungsanweisungen mittels einer Navigationseinrichtung (100) an einen Benutzer mit den folgenden Schritten:
◆ Bereitstellen einer Route, die von einer Position des Benutzers zu einer Zielposition führt,
◆ Bereitstellen eines Manövers, bei dessen Ausführung der Benutzer dem Verlauf der Route folgt,
◆ Feststellen, ob der Benutzer ein Anzeichen von Unkonzentriertheit zeigt, unter Verwendung einer Sensoreinheit (150) und,
◆ wenn festgestellt wird, dass der Benutzer kein Anzeichen von Unkonzentriertheit zeigt, Ausgeben einer ersten dem Manöver zugeordneten Folge von Bewegungsanweisungen und,
◆ wenn festgestellt wird, dass der Benutzer ein Anzeichen von Unkonzentriertheit zeigt, Ausgeben einer zweiten dem Manöver zugeordneten Folge von Bewegungsanweisungen.

2. Verfahren gemäß Anspruch 1,
bei dem die zweite Folge von Bewegungsanweisungen eine andere Anzahl von Bewegungsanweisungen als die erste Folge von Bewegungsanweisungen aufweist.

3. Verfahren gemäß einem der Ansprüche 1 und 2,
bei dem die erste Folge von Bewegungsanweisungen eine erste Bewegungsanweisung aufweist, die an einer ersten Geoposition auszugeben ist, und die zweite Folge von Bewegungsanweisungen eine zweite Bewegungsanweisung aufweist, die der ersten Bewegungsanweisung entspricht und an einer zweiten Geoposition auszugeben ist.

4. Verfahren gemäß einem der vorhergehenden Ansprüche,
bei dem die zweite Folge von Bewegungsanweisungen eine Bewegungsanweisung aufweist, deren Inhalt sich vom Inhalt einer entsprechenden Bewegungsanweisung der ersten Folge von Bewegungsanweisungen, die an derselben Geoposition ausgegeben wird, unterscheidet.

5. Verfahren gemäß einem der vorhergehenden Ansprüche,
bei dem zum Prüfen, ob der Benutzer ein Anzeichen von Unkonzentriertheit zeigt, ein Laut ausgewertet wird, den der Benutzer oder eine Begleitperson des Benutzers abgibt.

6. Verfahren gemäß Anspruch 5,
bei dem der Laut erfasst wird, indem ein Geräusch in der Nähe des Benutzers aufgenommen wird und aus dem Geräusch der Laut unter Berücksichtigung einer Störgeräuschinformation separiert wird, die unter Berücksichtigung einer Geoposition bereitgestellt wird, an der sich die Navigationseinrichtung 100 befindet.

7. Verfahren gemäß Anspruch 6,
bei dem die Störgeräuschinformation bereitgestellt wird, indem die Störgeräuschinformation unter Berücksichtigung der Geoposition aus einer Mehrzahl von Störgeräuschinformationen ausgewählt wird.

8. Verfahren gemäß Anspruch 7,
bei dem die Mehrzahl von Störgeräuschinformationen beim Zurücklegen der Route in der Vergangenheit gewonnen wurden.

9. Verfahren gemäß Anspruch 5,
bei dem die Art des Lauts bestimmt wird und die Art des Lauts als Indikator für Unkonzentriertheit verwendet wird.

10. Navigationseinrichtung (100) zum Ausgeben einer Folge von Bewegungsanweisungen, aufweisend:
◆ eine Sensoreinheit (150), eingerichtet zum Feststellen, ob der Benutzer ein Anzeichen von Unkonzentriertheit zeigt,
◆ eine Recheneinheit (110), eingerichtet zum Bereitstellen einer Route, die von einer Position des Benutzers zu einer Zielposition führt und Bereitstellen eines Manövers, bei dessen Ausführung der Benutzer dem Verlauf der Route folgt, und
◆ eine Ausgabe- und Bedieneinheit (130), eingerichtet zum Ausgeben einer ersten dem Manöver zugeordneten Folge von Bewegungsanweisungen, wenn festgestellt wird, dass der Benutzer kein Anzeichen von Unkonzentriertheit zeigt, und Ausgeben einer zweiten dem Manöver zugeordneten Folge von Bewegungsanweisungen, wenn festgestellt wird, dass der Benutzer ein Anzeichen von Unkonzentriertheit zeigt.
